# EUROPEAN PATENT APPLICATION

(11) **EP 3 174 130 A1**
(43) Date of publication of application: **31.05.2017**
(21) Application number: 16201223.1
(22) Date of filing: 29.11.2016
(51) Int. Cl.: H01M 2/02, H01M 2/08, H01M 4/66, H01M 10/0585

(54) **FLEXIBLE RECHARGEABLE BATTERY**

(30) Priority: 30.11.2015 KR 20150169386
(71) Applicant: Samsung SDI Co., Ltd., Giheung-gu Yongin-si, Gyeonggi-do 17084 (KR)
(72) Inventor: PARK, Bong-Kyoung, 17084 Gyeonggi-do (KR); SUH, Jun-Won, 17084 Gyeonggi-do (KR); NAM, Jung-Gyu, 17084 Gyeonggi-do (KR); YI, Jeong-Doo, 17084 Gyeonggi-do (KR); YANG, Jung-Yup, 17084 Gyeonggi-do (KR); HAN, Ju-Hyeong, 17084 Gyeonggi-do (KR); SOHN, Ju-Hee, 17084 Gyeonggi-do (KR); EOM, Hye-Ri, 17084 Gyeonggi-do (KR); HAN, Da-Woon, 17084 Gyeonggi-do (KR); SONG, Hyun-Hwa, 17084 Gyeonggi-do (KR); CHOI, Sol, 17084 Gyeonggi-do (KR); HONG, Seok-Hun, 17084 Gyeonggi-do (KR); KIM, Jan-Dee, 17084 Gyeonggi-do (KR)
(74) Representative: Mounteney, Simon James

(57) **Abstract**

A flexible rechargeable battery includes a first conductive member including a first resin layer, a first barrier layer, a second resin layer, a first electrode current collector layer, and a first electrode coating layer that are sequentially layered from an outer side thereof, a second conductive member that faces the first conductive member, the second conductive member including a third resin layer, a second barrier layer, a fourth resin layer, a second electrode current collector layer, and a second electrode coating layer that are sequentially layered from an outer side thereof, and a sealing portion located on edges of the first conductive member and the second conductive member. The sealing portion is made of a metallic material.

## Description

### BACKGROUND

### 1. Field

Embodiments of the invention relate to a flexible rechargeable battery.

### 2. Description of the Related Art

In general, a stacked battery may be manufactured by inserting an electrode assembly formed by alternately layering a positive electrode and a negative electrode, interposing a separator therebetween, into a pouch and sealing the pouch. However, such a pouch-type battery may have little or no flexibility. Therefore, the battery may be damaged due to iterative compressive stress and tensile stress when the battery is iteratively bent with a constant curvature radius.

### SUMMARY

Embodiments of the invention seek to provide a flexible rechargeable battery having excellent bending and folding characteristics. The invention also seeks to provide a flexible rechargeable battery that may maintain stability even when subjected to iterative bending and folding

The invention provides a flexible rechargeable battery including a first conductive member including a first resin layer, a first barrier layer, a second resin layer, a first electrode current collector layer, and a first electrode coating layer that are sequentially layered from an outer side thereof, a second conductive member that faces the first conductive member, the second conductive member including a third resin layer, a second barrier layer, a fourth resin layer, a second electrode current collector layer, and a second electrode coating layer that are sequentially layered from an outer side thereof, and a sealing portion located on edges of the first conductive member and the second conductive member. The sealing portion is made of a metallic material.

The sealing portion may include at least one selected from tin, zinc, copper, aluminum, nickel, silver, indium, antimony, bismuth, and an alloy thereof.

The flexible rechargeable battery may further include an electrode assembly provided between the first conductive member and the second conductive member. The electrode assembly may include alternating layers of at least one first internal electrode and at least one second internal electrode, with a separator therebetween.

At least one of the second resin layer and the fourth resin layer may include a plurality of conductive portions.

The sealing portion may be located on edges of the first electrode current collector layer and on at least one of the second electrode current collector layer and the second barrier layer.

The sealing portion may be located on an edge of the first barrier layer and on an edge of at least one of the second current collector layer and the second barrier layer.

At least one of the first resin layer, the second resin layer, the third resin layer, and the fourth resin layer may be made of at least one selected from polyimide (PI), polyether ether ketone (PEEK), polyethersulfone (PES), polyetherimide (PEI), polycarbonate (PC), and polyethylene terephthalate (PET).

The first resin layer and the second resin layer may be made of the same material.

The third resin layer and the fourth resin layer may be made of the same material.

At least one of the first barrier layer and the second barrier layer may be made of a conductive metal.

The flexible rechargeable battery may further include a circuit film layer located at an outer surface of at least one of the first conductive member and the second conductive member.

The first conductive member and the second conductive member may be joined together by a melted metal joint, the melted metal joint including the metallic material.

Embodiments of the invention are also directed to a battery pack including the flexible rechargeable battery as a unit cell.

Embodiments of the invention are also directed to a device including the battery pack as a power source.

At least some of the above and other featurs of the invention are set out in the claims.

### BRIEF DESCRIPTION OF THE DRAWINGS

Features of the invention will be made more apparent to those of skill in the art by describing in detail embodiments thereof with reference to the attached drawings in which:
FIG. 1 illustrates a perspective view of a flexible rechargeable battery according to an embodiment of the invention.
FIG. 2 illustrates an exploded perspective view of the flexible rechargeable battery of FIG. 1.
FIG. 3 illustrates a cross-sectional view of FIG. 1, taken along the line I-I.
FIG. 4 illustrates a cross-sectional view of a flexible rechargeable battery according to an embodiment of the invention.
FIG. 5 illustrates a cross-sectional view of a flexible rechargeable battery according to an embodiment of the invention.
FIG. 6 illustrates a cross-sectional view of a flexible rechargeable battery according to an embodiment of the invention.
FIG. 7 illustrates an exploded perspective view of a flexible rechargeable battery according to an embodiment of the invention.
FIG. 8 illustrates a cross-sectional view of a flexible rechargeable battery according to an embodiment of the invention.

### DETAILED DESCRIPTION

Example embodiments of the invention will now be described more fully hereinafter with reference to the accompanying drawings; however, the invention may be embodied in different forms and should not be construed as limited to the embodiments set forth herein. Rather, these embodiments are provided so that this disclosure will be thorough , and will convey implementations to those skilled in the art.

In the drawing figures, the dimensions of layers and regions may be exaggerated for clarity of illustration. It will also be understood that when a layer or element is referred to as being "on" another layer or substrate, it can be directly on the other layer or element, or intervening layers may also be present. Further, it will be understood that when a layer is referred to as being "between" two layers, it can be the only layer between the two layers, or one or more intervening layers may also be present. Like reference numerals refer to like elements throughout.

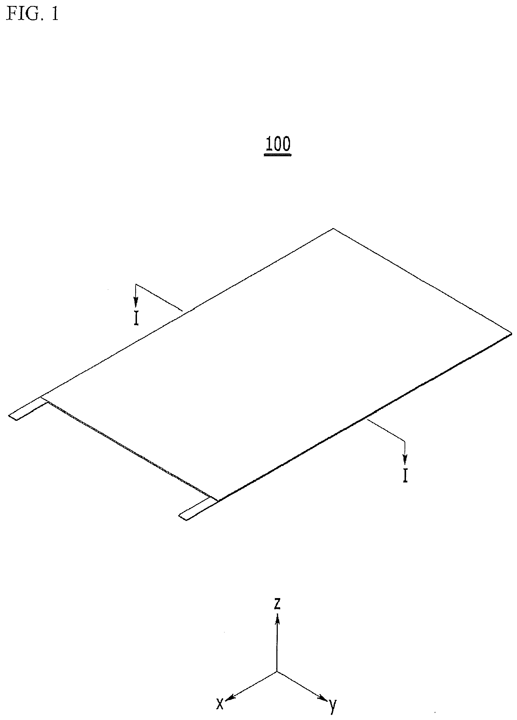

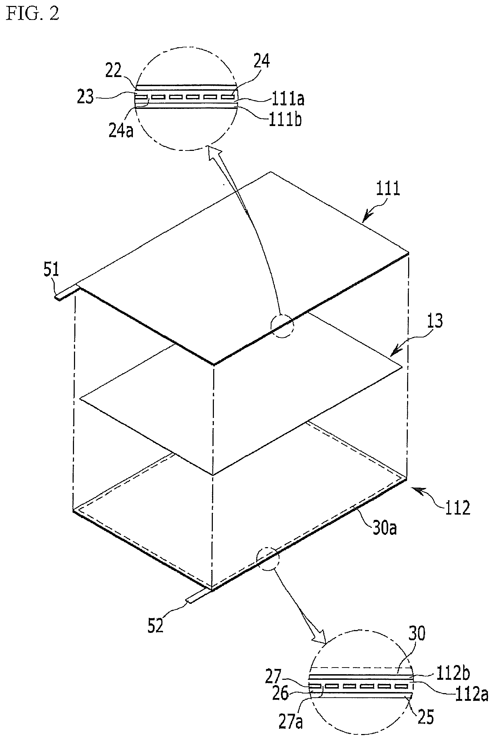

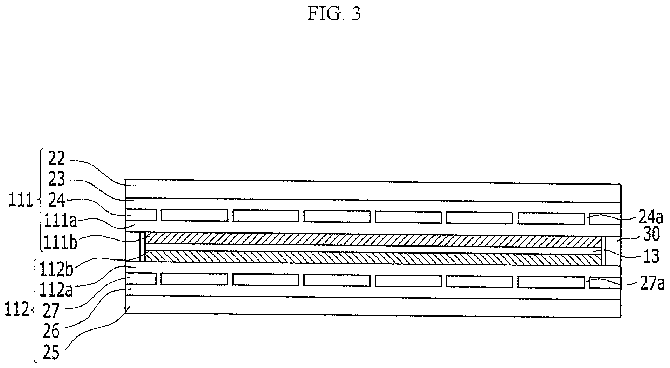

FIG. 1 illustrates a perspective view of a flexible rechargeable battery according to an embodiment of the invention, FIG. 2 illustrates an exploded perspective view of the rechargeable battery of FIG. 1, and FIG. 3 illustrates a cross-sectional view of FIG. 1, taken along the line I-I.

Referring to FIG. 1 to FIG. 3, a flexible rechargeable battery 100 according to an embodiment of the invention may include a first conductive member 111 and a second conductive member 112 that are disposed facing each other. The first and second conductive members 111 and 112 may be bonded by a sealing portion 30 provided on edges of the first and the edge of the second conductive members 111 and 112.

In the present disclosure, the first conductive member 111 and the second conductive member 112 may respectively function as different electrodes or may function as the same electrode.

When the first conductive member 111 and the second conductive member 112 respectively function as different electrodes, for example, when the first conductive member 111 functions as a positive electrode, the second conductive member 112 may function as a negative electrode. When the first conductive member 111 functions as a negative electrode, the second conductive member 112 may function as a positive electrode.

In some implementations, when the first conductive member 111 and the second conductive member 112 function as the same electrode, both of the first conductive member 111 and the second conductive member 112 may function as negative electrodes or may function as positive electrodes.

Hereinafter, for better comprehension and ease of description of thisembodiment, the first conductive member 111 and the second conductive member 112 will be considered as functioning as different electrodes. However, in embodiments in which the first and second conductive members 111 and 112 function as the same electrode, a description of each configuration with respect to the first and second conductive members 111 and 112 may be the same as a description of the corresponding electrode.

The first conductive member 111 may include a first resin layer 22, a first barrier layer 23, a second resin layer 24, a first electrode current collector layer 111a, and a first electrode coating layer 111b, which are sequentially layered from an outer surface of the rechargeable battery. For example, the first resin layer 22 may be an outer layer, and the first barrier layer 23, the second resin layer 24, the first electrode current collector layer 111a, and the first electrode coating layer 111b may be sequentially layered in an inward direction in the flexible rechargeable battery 100, the inward direction being perpendicular to the x-y plane.

At least one of the first resin layer 22 and the second resin layer 24 may be made of at least one selected from polyimide (PI), polyether ether ketone (PEEK), polyethersulfone (PES), polyetherimide (PEI), polycarbonate (PC), and polyethylene terephthalate (PET), as examples.

The first resin layer 22 and the second resin layer 24 may be made of different materials. In some implementations, the first and second resin layers 22 and 24 may be made of the same material such that a layering process may be simplified and changes in processing conditions with respect to different materials may be avoided.

The first barrier layer 23 may be provided between the first resin layer 22 and the second resin layer 24. The first barrier layer 23 may be made of a conductive metal. The first barrier layer 23 may prevent the permeation of foreign materials such as air and moisture into the rechargeable battery.

The conductive metal may be one selected from copper, aluminum, nickel, and stainless steel, as examples. A material of the first barrier layer 23 may be the same as or different from a material of the first electrode current collector layer 111a.

The first barrier layer 23 may be provided, for example, by forming a metal coating layer on one side of the first resin layer 22 or by attaching metal foil to the first resin layer 22.

The second resin layer 24 may have a porous structure in which a plurality of pores are formed. Such a porous structure may form a first conductive portion 24a that enables conductive connection between the first barrier layer 23 and a first electrode current collector layer 111a. When the first conductive portion 24a is included in the second resin layer 24, a first electrode tab 51 may be attached to the electrode current collector layer 111a and/or the first barrier layer 23.

The first electrode current collector layer 111a may be provided on the second resin layer 24.

The first electrode current collector layer 111a, may include, for example, at least one of aluminum, copper, nickel aluminum, stainless steel, titanium, and an alloy thereof. In some implementations, the first electrode current collector layer 111a may be formed by surface-treating the surface of at least one of aluminum, copper, and stainless steel with carbon, nickel, titanium, silver, or the like. When the first conductive member 111 functions as a negative electrode, the first electrode current collector layer 111a may be made of a copper material, as an example.

The first electrode current collector layer 111a may be in the shape of a mesh or metal foil.

The first electrode coating layer 111b may be provided on the first electrode current collector layer 111a. An uncoated region, in which the first electrode coating layer 111b is not formed, may be provided at one end of the first electrode current collector layer 111a. The first electrode tab 51 may be connected to the uncoated region.

The first electrode coating layer 111b may be made of a material including at least one of a carbon material such as crystalline carbon, amorphous carbon, carbon composite, carbon fiber, or the like, lithium metal, metal oxide, or a lithium alloy, as examples.

The second conductive member 112 may include a third resin layer 25, a second barrier layer 26, a fourth resin layer 27, a second electrode current collector layer 112a, and a second electrode coating layer 112b which are sequentially layered from the outer side thereof. For example, the third resin layer 25 may be an outer layer, and the second barrier layer 26, the fourth resin layer 27, the second electrode current collector layer 112a, and the first electrode coating layer 112b may be sequentially layered in an inward direction in the flexible rechargeable battery 100, the inward direction being perpendicular to the x-y plane.

At least one of the third resin layer 25 and the fourth resin layer 27 may be made of at least one selected from polyimide (PI), polyether ether ketone (PEEK), polyethersulfone (PES), polyetherimide (PEI), polycarbonate (PC), and polyethylene terephthalate (PET), as examples.

The third resin layer 25 and the fourth resin layer 27 may be made of different materials. In some implementations, the first and second resin layers 22 and 24 may be made of the same material such that a layering process may be simplified and changes in processing conditions with respect to different materials may be avoided.

The second barrier layer 26 may be provided between the third resin layer 25 and the fourth resin layer 27. The second barrier layer 26 may be made of a conductive metal. The second barrier layer 26 may prevent the permeation of foreign materials such as air and moisture into the rechargeable battery.

The conductive metal may be one selected from copper, aluminum, nickel, and stainless steel, as examples. A material of the second barrier layer 26 may be the same as or different from a material of the second electrode current collector layer 112a.

In some implementations, the second barrier layer 26 may be made of nickel or stainless steel.

In some implementations, the second barrier layer 26 may be provided by forming a metal coating layer on one side of the third resin layer 25 or by attaching metal foil to the third resin layer 25.

The second resin layer 24 may have a porous structure in which a plurality of pores are formed. Such a porous structure may form a second conductive portion 27a that enables conductive connection between the second barrier layer 26 and a second electrode current collector layer 112a. When the second conductive portion 27a is included in the fourth resin layer 27, a second electrode tab 52 may be attached to the second electrode current collector layer 112a and/or the second barrier layer 26.

The second electrode current collector layer 112a may be provided on the fourth resin layer 27.

The second electrode current collector layer 112a may include, for example, at least one of aluminum, copper, nickel aluminum, stainless steel, titanium, and an alloy thereof. In some implementations, the second electrode current collector layer 112a may be formed by surface-treating the surface of at least one of aluminum, copper, and stainless steel with carbon, nickel, titanium, silver, or the like. When the second conductive member 112 functions as a positive electrode, the second electrode current collector layer 112a may be made of an aluminum material, as an example.

The second current collector layer 112a may be may be in the shape of a mesh or metal foil.

The second electrode coating layer 112b may be provided on the second electrode current collector layer 112a. An uncoated region, in which the second electrode coating layer 112b is not formed, may be provided at one end of the second electrode current collector layer 112a. The second electrode tab 52 may be connected to the uncoated region.

The second electrode coating layer 112b may be made of a material including at least one of a lithium transition metal oxide such as cobalt, manganese, nickel, cobalt acid lithium, nickel acid lithium, nickel cobalt acid lithium, nickel cobalt aluminum acid lithium, nickel cobalt manganese acid lithium, manganese acid lithium, and lithium iron phosphate, and a composite oxide of a metal selected from nickel sulfide, copper sulfide, sulfur, iron oxide, vanadium oxide, and a combination thereof and lithium, as examples.

As a material forming the second electrode coating layer 112b, a material having a coating layer at the surface of a composite oxide of the metal and lithium, or a compound having a coating layer at the surface of a composite oxide of the metal and lithium and the composite oxide of metal and lithium may be used. The coating layer formed at the surface of the composite oxide of metal and lithium may include at least one coating element compound selected from a coating-element oxide, coating-element hydroxide, a coating-element oxyhydroxide, a coating-element oxycarbonate, and a coating-element hydroxycarbonate. Further, a compound forming such a coating layer may be amorphous or crystalline.

As shown in FIG. 2, a separator 13 may be provided between the first conductive member 111 and the second conductive member 112.

The separator 13 may be a suitable separator applicable to a lithium battery that can separate the first conductive member 111 and the second conductive member 112 and provide a movement path of lithium ions. For example, separator that has low resistance to ion movement of an electrolyte and has excellent electrolyte solution humidification performance may be used. For example, a material of the separator 13 may be selected from glass fiber, polyester, Teflon, polyethylene, polypropylene, polytetrafluoroethylene (PTFE), or a combination thereof. The separator may have a non-woven fabric or woven fabric form. For example, in a lithium ion rechargeable battery, a polyolefin-based polymer separator such as polyethylene, polypropylene, or the like may be used. A separator coated with a ceramic component or including a polymer material may be used for assuring heat resistance and mechanical strength, and single-layered or multi-layered structure may be selectively used.

When the first conductive member 111 and the second conductive member 112 both function as electrodes and as exterior materials, additional exterior material may be omitted. Thus, compared to a conventional rechargeable battery, the thickness of the rechargeable battery according to the present embodiment may be significantly reduced while maintaining a same capacity. The first conductive member 111 and the second conductive member 112 may respectively include the first resin layer 22, the second resin layer 24, the third resin layer 25, and the fourth resin layer 27, each made of a flexible material. Force applied to the rechargeable battery may be significantly reduced when the rechargeable battery is bent such that the rechargeable battery may maintain stability even when compressive stress and tensile stress are iteratively applied to the rechargeable battery.

The first conductive member 111 and the second conductive member 112 may be bonded using the sealing portion 30 provided at the edge of the first and second conductive members 111 and 112. The sealing portion 30 may be made of a metal material.

For example, the sealing portion 30 may include at least one selected from tin, zinc, copper, aluminum, nickel, silver, indium, antimony, bismuth, and an alloy thereof.

When the sealing portion 30 is made of a metal material, excellent adherence can be assured even when the width of the sealing portion 30 is narrower than a sealing portion 30 made of resin. Excellent water permeation prevention not only in the vertical direction but also in the horizontal direction may be provided. The width of the sealing portion 30 may be narrow. Accordingly, the width of an electrode provided in the flexible rechargeable battery 100 may be be relatively widened, thereby enabling capacity of the battery to be increased. For example, the width of the sealing portion 30 made of the metal material may be 10µm to 3mm.

The sealing portion 30 may be formed by applying a metal solder paste to a sealing area 30a at each of facing sides of the first and second conductive members 111 and 112, applying heat after folding the sealing areas 30a, and then melting the two areas 30a for bonding, such as by a soldering method. In other implementations, the sealing portion 30 may be formed by welding using a laser or the like, as an example.

When the sealing portion 30 is formed by soldering or welding using a metallic material, the thickness of metal forming the sealing portion 30 may be be adjusted according to the entire thickness (i.e., z-axis direction of FIG. 1) of the rechargeable battery, which may vary due to an increase or decrease of in the number of layers in the flexible rechargeable battery 100 (for example, as described below) such that the thickness variation can be smoothly accommodated.

A location of the sealing portion 30 in the first conductive member 111 and the second conductive member 112 will be described in detail hereinafter.

FIG. 3 to FIG. 6 respectively exemplarily illustrate various cross-section shapes of flexible rechargeable batteries of which sealing portions 30 are respectively located in different positions according to embodiments of the invention.

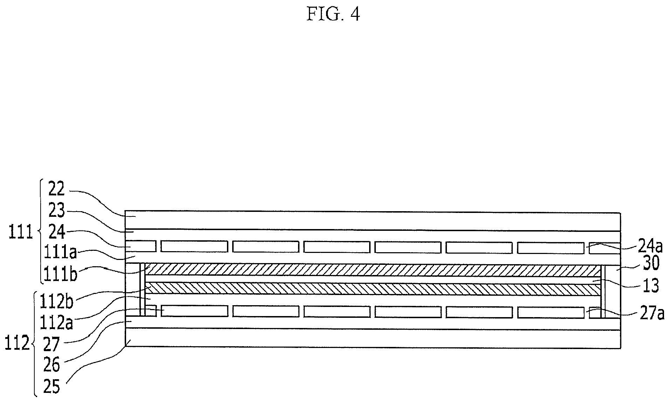

Referring to FIG. 3 and FIG. 4, a sealing portion 30 may be provided at an edge of a first electrode current collector layer 111a of a first conductive member 111 and at an edge of at least one of a second electrode current collector layer 112a of a second conductive member 112 and a second barrier layer 26. For example, as shown in FIG. 3, the sealing portion 30 may be provided on edges of the first electrode current collector layer 111a and the second electrode current collector layer 112a, for example, on edges of the first electrode current collector layer 111a and the second electrode current collector 112a that face each other. As shown in FIG. 4, the sealing portion 30 may be provided on the edge of the first electrode current collector layer 111a and the second barrier layer 26, for example, on edges of the first current collector layer 111a and the second barrier layer 26 that face each other. In this case, a horizontal cross-sectional area of the first electrode coating layer 111b, for example, a cross-sectional area (i.e., the area in the x-y plane) in a direction that is perpendicular to a thickness direction of the rechargeable battery may be smaller than a horizontal cross-sectional area of the first electrode current collector layer 111a such that an edge of the second barrier layer 26 may be exposed to face the edge of the first current collector layer 111a.

A horizontal cross-sectional area of the second electrode coating layer 112b, for example, a cross-sectional area (i.e., the area in the x-y plane) of a direction that is perpendicular to a thickness direction of the rechargeable battery may be smaller than a horizontal cross-sectional area of the second electrode current collector layer 112a or the second barrier layer 26.

Sealing areas 30a, each having the same size, may be provided at edges of sides of the first electrode current collector layer 111a and the second electrode current collector layer 112a, facing each other or sides of the first electrode current collector layer 111 and the second barrier layer 30, facing each other. The first conductive member 111 and the second conductive member 112 may be bonded using a soldering method or a welding method.

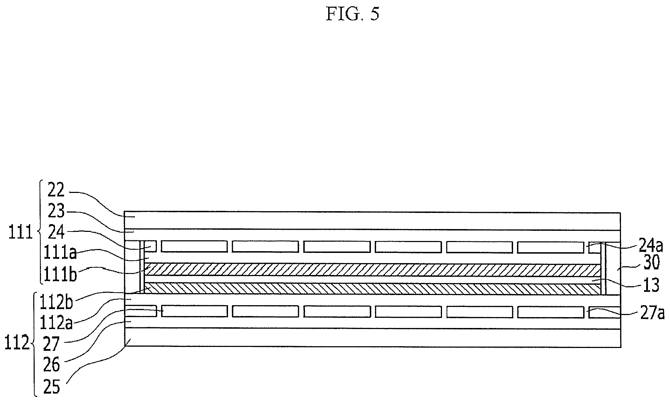

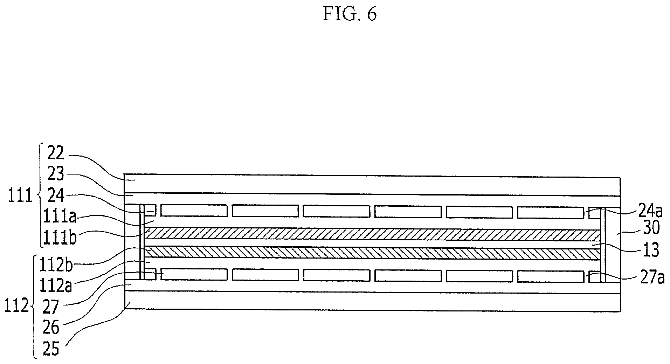

Referring to FIG. 5 and FIG. 6, a sealing portion 30 may be provided on the edge of at least one of the first barrier layer 23 and the edge of at least one of the second electrode current collector layer 112a and the second barrier layer 26. For example, as shown in FIG. 5, the sealing portion 30 may be provided on the edges of the first barrier layer 23 and the second electrode current collector layer 112a. As shown in FIG. 6, the sealing portion 30 may be provided on the edges of the first barrier layer 23 and the second barrier layer 26.

In this case, a horizontal cross-sectional area of the first electrode current collector layer 111a and the first electrode coating layer 111b, for example, a cross-sectional area (i.e., area in the x-y plane) in a direction that is perpendicular to a thickness direction of the flexible rechargeable battery, may be smaller than a horizontal cross-sectional area of the first barrier layer 23. An exposed surface at the edge of the first barrier layer 23 and a surface of the second electrode current collector layer 112a may face each other.

A horizontal cross-sectional area of the second electrode coating layer 112b, for example, a cross-sectional area (i.e., area in the x-y plane) in a direction that is perpendicular to a thickness direction of the flexible rechargeable battery, may be smaller than a horizontal cross-sectional area of the second electrode current collector layer 112a or the second barrier layer 26.

The sealing regions 30a, each having the same size, may be respectively provided at the sides of the first barrier layer 23 and the second electrode current collector layer 112a or the second barrier layer 26, facing each other. The sealing portion 30 may be provided in the sealing regions 30a and the first conductive member 111 and the second conductive member 112 may be bonded by using a soldering method or a welding method.

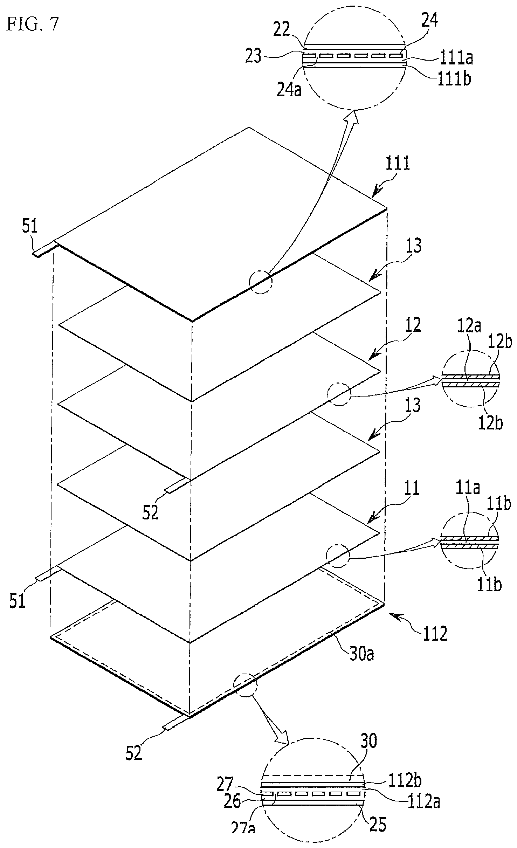

FIG. 7 illustrates a cross-sectional view of a flexible rechargeable battery according to an embodiment of the invention.

As shown in FIG. 7, an electrode assembly in which at least one first internal electrode 11 and at least one second internal electrode 12 are alternately layered while interposing a separator 13 therebetween may be provided between the first conductive member 111 and the second conductive member 112. In FIG. 7, a single layer of first internal electrode 11 and a single layer of second internal electrode 12 are illustrated for convenience, but it is to be understood that a plurality of first internal layers 11 and a plurality of second internal layers 12 may be layered.

The first internal electrode 11 may be a negative electrode. The first internal electrode 11 may include a first internal electrode current collector layer 11a and a first internal electrode coating layer 11b provided on the first internal electrode current collector layer 11a. An uncoated region, where the first internal electrode coating layer 11b is not formed, may be present at one end of the first internal electrode current collector layer 11a, and a first electrode tab 51 may be connected to the uncoated region.

As the first internal electrode current collector layer 11a, copper foil, nickel foil, stainless steel foil, titanium foil, nickel foal, copper foam, a polymer member coated with conductive metal, or a combination thereof may be used, as examples.

The first internal electrode coating layer 11b may be formed at one side or both sides of the first internal electrode current collector layer 11a using a composition including a negative active material. The negative active material may include a material that reversibly intercalates/deintercalates lithium ions, a lithium metal, a lithium metal alloy, a material being capable of doping and dedoping lithium, or a transition metal oxide, as examples. A composition that forms the first internal electrode coating layer 11b may further include a binder, a conductive material/and or a viscosity agent in addition to the negative active material.

The second internal electrode 12 may be a positive electrode. The second internal electrode 12 may include a second internal electrode current collector layer 12a and a second internal electrode coating layer 12b provided on the second internal electrode current collector layer 12a. An uncoated region, where the second internal electrode coating layer 12b is not formed, may be provided at one end of the second internal electrode current collector layer 12a, and a second electrode tab 52 may be connected to the uncoated region.

As the second internal electrode current collector layer 12a, aluminum foil, nickel foil, stainless steel foil, titanium foil, nickel foil, copper foam, a polymer member coated with conductive metal, or a combination thereof may be used, as examples.

The second internal electrode coating layer 12b may be formed at one side or both sides of the second internal electrode current collector layer 12a using a composition including a positive active material. As the positive electrode active material, a compound (lithiated intercalation compound) that can perform reversible intercalation and deintercalation on lithium may be used, as an example. A composition that forms the second internal electrode coating layer 12b may further include a binder, a conductive material/and or a viscosity agent in addition to the positive active material.

Herein, it is described that the first internal electrode 11 is a negative electrode and the second internal electrode 12 is a positive electrode. In other implementations, the polarity of the first internal electrode 11 and the polarity of the second internal electrode 12 may be switched with each other. For example, the first internal electrode 11 may be a negative electrode and the second internal electrode 12 may be a positive electrode

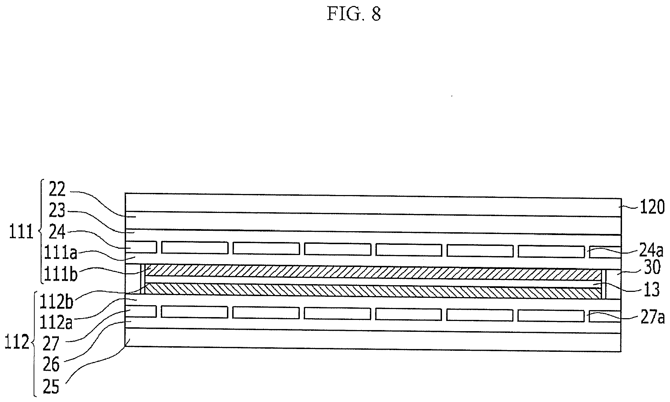

FIG. 8 illustrates a cross-sectional shape of a flexible rechargeable battery 100 according to an embodiment.

Referring to FIG. 8, a flexible rechargeable battery 100 may further include a circuit film layer 120 layered onto an exterior surface of at least one of the first conductive member 111 and the second conductive member 112. Each constituent element included in the flexible rechargeable battery 100 having such a structure may be the same as described above, and therefore description thereof will not be repeated.

A circuit pattern and/or an antenna pattern for implementation of various performances desired for a device in which the flexible rechargeable battery 100 according to the present embodiment of the invention is applied may be included in the circuit film layer 120. In this case, the device having the flexible rechargeable battery 100 according to the present embodiment does not need to provide an additional space for forming the above-stated circuit pattern and/or antenna pattern. Thus, a space occupied by the flexible rechargeable battery 100 may be expanded. Accordingly, the size of battery applied to the same device can be increased, thereby increasing battery capacity.

Further, as described above, when only the separator 13 is included between the conductive members 111 and 112 without using an exterior material, or when at least one first internal electrode 11 and/or at least one second internal electrode 12 are included interposing the separator 13 therebetween, with reference to the x-y plane, a rechargeable battery having the same size and same capacity as a typical rechargeable battery while remarkably reducing the thickness thereof can be manufactured.

Further, a flexible rechargeable battery according to the present invention may include a sealing portion 30 made of a metal material, thereby having excellent water permeation prevention not only in the vertical direction but also in the horizontal direction, and adherence between the conductive members 111 and 112 can be improved.

A battery pack including the above-described flexible rechargeable battery as a unit cell may be provided.

Further, a device including the battery pack as a power source may be provided. Such a device may be an electronic device well known to a person skilled in the art. The device may be, for example, a cellular phone, a portable computer, a smart phone, a tablet PC, a smart pad, a smart book, an electric vehicle, a hybrid electric vehicle, a plug-in hybrid electric vehicle, and/or a power storage device, as examples.

Example embodiments of the invention have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A flexible rechargeable battery, comprising:
a first conductive member including a first resin layer, a first barrier layer, a second resin layer, a first electrode current collector layer, and a first electrode coating layer that are sequentially layered from an outer side thereof;
a second conductive member that faces the first conductive member, the second conductive member including a third resin layer, a second barrier layer, a fourth resin layer, a second electrode current collector layer, and a second electrode coating layer that are sequentially layered from an outer side thereof; and
a sealing portion located on edges of the first conductive member and the second conductive member,
wherein the sealing portion comprises a metallic material.

2. A flexible rechargeable battery as claimed in claim 1, wherein the sealing portion includes at least one selected from tin, zinc, copper, aluminum, nickel, silver, indium, antimony, bismuth, and an alloy thereof.

3. A flexible rechargeable battery as claimed in claim 1 or 2, further comprising:
an electrode assembly provided between the first conductive member and the second conductive member, the electrode assembly including alternating layers of at least one first internal electrode and at least one second internal electrode, with a separator therebetween.

4. A flexible rechargeable battery as claimed in any preceding claim, wherein at least one of the second resin layer and the fourth resin layer includes a plurality of conductive portions.

5. A flexible rechargeable battery as claimed in any preceding claim, wherein the sealing portion is located on an edge of the first electrode current collector layer and on an edge of at least one of the second electrode current collector layer and the second barrier layer.

6. A flexible rechargeable battery as claimed in one of Claims 1 to 4, wherein the sealing portion is located on an edge of the first barrier layer and on an edge of at least one of the second current collector layer and the second barrier layer.

7. A flexible rechargeable battery as claimed in any preceding claim, wherein at least one of the first resin layer, the second resin layer, the third resin layer, and the fourth resin layer is made of at least one selected from polyimide (PI), polyether ether ketone (PEEK), polyethersulfone (PES), polyetherimide (PEI), polycarbonate (PC), and polyethylene terephthalate (PET).

8. A flexible rechargeable battery as claimed in claim 7, wherein the first resin layer and the second resin layer are made of the same material.

9. A flexible rechargeable battery as claimed in claim 7 or 8, wherein the third resin layer and the fourth resin layer are made of the same material.

10. A flexible rechargeable battery as claimed in any preceding claim, wherein at least one of the first barrier layer and the second barrier layer is made of a conductive metal.

11. A flexible rechargeable battery as claimed in any preceding claim, further comprising a circuit film layer located at an outer surface of at least one of the first conductive member and the second conductive member.

12. A flexible rechargeable battery as claimed in any preceding claim, wherein the first conductive member and the second conductive member are joined together by a melted metal joint, the melted metal joint including the metallic material.

13. A battery pack comprising a flexible rechargeable battery as claimed in any preceding claim as a unit cell.

14. A device comprising a battery pack as claimed in claim 13 as a power source.
